# DEMANDE DE BREVET EUROPEEN

(11) **EP 2 518 392 A2**
(43) Date de publication de la demande: **31.10.2012**
(21) Numéro de dépôt: 12165722.5
(22) Date de dépôt: 26.04.2012
(51) Int. Cl.: F21S 8/10, F21V 5/00, F21V 7/00, F21V 8/00

(54) **Dispositif de signalisation avec fonctions "stop" et "position" utilisant un guide de lumière et générant un effet 3D**

(30) Priorité: 29.04.2011 FR 1153699
(71) Demandeur: VALEO ILUMINACION, S.A., 23600 Martos (ES)
(72) Inventeur: Martinez, Juan Manuel, 18014 Granada (ES); Chotard, Alexandre, 23600 Martos (ES); Romo, Jesus, 23600 Martos (ES); Jimenez Villar, Miguel Angel, 23600 Martos (ES); Moisy, Eric, 23009 Jaen (ES); Lopez Centeno, Jesus, 23600 Martos (ES); Perez, Edoardo, 23600 Martos Jaen (ES)
(74) Mandataire: Léveillé, Christophe

(57) **Abrégé**

L'invention a trait à module de signalisation lumineuse, notamment pour véhicules automobiles, comprenant : un réflecteur (10) ; un écran (12) disposé en face du réflecteur, avec une zone semi-réfléchissante (16) ; des moyens rayonnants (4, 6) aptes à envoyer des rayons lumineux. Le réflecteur, l'écran et les moyens rayonnants étant agencés de manière à générer un effet visuel répétitif de profondeur. La zone semi-réfléchissante (16) est configurée et agencée par rapport aux moyens rayonnant (4, 6) de manière à ce qu'une deuxième partie des rayons lumineux émis par des moyens rayonnant ne rencontre pas la zone semi-transparente..

## Description

L'invention a trait à un module de signalisation lumineuse, notamment pour véhicules automobiles. Plus particulièrement l'invention a trait à un module de signalisation du type « position » (ou « lanterne ») et/ou du type feux "stop" pour véhicule. Plus particulièrement encore, l'invention a trait à un dispositif de signalisation générant un effet de profondeur en trois dimensions grâce à un dispositif optique particulier. L'invention a trait également à un dispositif de signalisation comprenant un tel module.

Le document de brevet EP 1 916 471 A1 décrit un feu arrière du type "lanterne" comprenant une cavité formée par un réflecteur et un écran disposé à distance du réflecteur. L'écran a la particularité d'être semi-transparent, c'est-à-dire qu'une partie des rayons lumineux le rencontrant est réfléchie et une autre partie est transmise. La cavité présente la particularité que l'une des surfaces du réflecteur et de l'écran qui délimitent la cavité est bombée. Une série de sources lumineuses du type diode à électroluminescence est disposée à la périphérie du réflecteur et orientée de sorte à émettre la lumière généralement vers l'écran. Etant donné la nature semi-transparente de celui-ci, une partie des rayons lumineux est directement transmise et une partie est réfléchie vers le réflecteur. Ce dernier réfléchit alors ces rayons vers l'écran avec un décalage dirigé vers le centre du réflecteur. Ces rayons réfléchis par le réflecteur rencontrent à nouveau l'écran. Similairement aux rayons lumineux provenant directement des sources lumineuses, une partie des rayons est transmise par l'écran et une partie est réfléchie vers le réflecteur et ainsi de suite. Il résulte de ces multiples transmissions partielles et réflexions partielles un effet optique de profondeur en trois dimensions. La puissance d'éclairage ou d'illumination des rayons lumineux émis décroit progressivement au fur et à mesure des réflexions dans la cavité. Cet effet optique est intéressant car il permet une personnalisation de la "lanterne" attirant l'attention des autres automobilistes. Il permet également la dissimulation de la "lanterne" dans un élément de carrosserie, tel qu'un pare-choc ou une aile de véhicule automobile. Il permet également la réalisation d'un dispositif de signalisation de faible épaisseur et de faible encombrement au regard de l'effet de profondeur généré. En effet, la nature semi-transparente de l'écran est obtenue par l'application d'un recouvrement métallique qui peut lui donner un aspect métallisé similaire à celui d'un élément de carrosserie. L'enseignement de ce document présente cependant un inconvénient majeur, à savoir le traitement de l'écran destiné à le rendre semi-transparent. La couche métallique appliquée sur l'écran va avoir pour conséquence que plus de 4% de la lumière est réfléchie dans la cavité et que moins de 96% des rayons provenant des sources lumineuses sera transmis (sans compter les pertes inhérentes au matériau de l'écran). Le taux de réflexion et de transmission peut varier et sera directement dépendant de l'application de la couche métallique. D'un point de vue procédé, il est très difficile de garantir un taux de réflexion et de transmission dans une plage de tolérance étroite. La conséquence est qu'en l'absence d'un procédé de traitement coûteux de l'écran, la "lanterne" équipée d'une source lumineuse de puissance standard risque de ne pas remplir les conditions photométriques requises par la législation pour une fonction de signalisation, et risque également de générer une différence d'aspect entre les feux de position gauche et droit du véhicule. Pour ces raisons, cette construction est encore moins adaptée à une fonction du type "stop" requérant d'un point vue photométrique une puissance d'éclairage sensiblement supérieure. De plus, la construction est relativement contraignante du point de vue du nombre de sources lumineuses nécessaire et également de la forme du feu. En effet, elle est adaptée à des formes compactes par opposition à des formes allongées qui sinon requerraient un trop grand nombre de sources lumineuses.

L'invention a pour objectif de proposer un module de signalisation palliant au moins un des inconvénients sus mentionnés. Plus particulièrement, l'invention a pour objectif de proposer un module de signalisation peu coûteux à réaliser, assurant une photométrie suffisante notamment pour une fonction "stop" et/ou permettant une certaine liberté de forme, notamment des formes allongées.

L'invention a pour objet un module de signalisation lumineuse, notamment pour véhicules automobiles, comprenant: un réflecteur avec une surface réfléchissante; un écran disposé en face du réflecteur, l'écran comprenant une zone semi-réfléchissante; des moyens rayonnants aptes à envoyer des rayons lumineux, le réflecteur, l'écran et les moyens rayonnants étant agencés de manière à ce qu'une première partie desdits rayons émis par les moyens rayonnants rencontre la zone semi-réfléchissante, certains des rayons de cette première partie étant transmis directement à travers la zone semi-réfléchissante, d'autres des rayons de cette première partie étant réfléchis par la zone semi-réfléchissante vers le réflecteur qui les renvoie à nouveau vers la zone semi-réfléchissante, de manière à générer un effet visuel répétitif de profondeur; remarquable en ce que la zone semi-réfléchissante est configurée et agencée par rapport aux moyens rayonnants de manière à ce qu'une deuxième partie des rayons lumineux émis par les moyens rayonnant ne rencontre pas la zone semi-transparente.
La zone semi-réfléchissante est agencée de manière à ce que, d'une part, certains des rayons la rencontrant subissent au moins une fois l'enchaînement de réflexions comprenant une réflexion par la zone semi-réfléchissante, puis une réflexion par le réflecteur pour atteindre à nouveau la zone réfléchissante, et d'autre part, certains des rayons la rencontrant soient transmis à travers l'écran. Certains rayons peuvent subir plusieurs fois cet enchainement. Dans ce cas l'effet 3D sera renforcé. Préférentiellement la deuxième partie des rayons lumineux passe à côté de la zone semi-transparente.
Les moyens rayonnants sont aptes à émettre de la lumière.
Préférentiellement, la première et/ou la deuxième partie des rayons lumineux émis par les moyens rayonnants correspondent à au moins 30%, voire 40% desdits rayons lumineux émis.

Selon un mode avantageux de l'invention, l'écran forme avec ledit réflecteur un espace dans lequel se propage les rayons réfléchis, cet espace étant délimité par une surface dé l'écran et une surface réfléchissante du réflecteur, au moins une de ces surfaces étant agencée de manière à ce que les rayons réfléchis par la zone semi-réfléchissante depuis un premier endroit de cette zone rencontrent à nouveau cette zone, après réflexion sur le réflecteur, en un deuxième endroit distinct du premier endroit.

Selon un mode avantageux de l'invention, l'écran forme avec ledit réflecteur un espace dans lequel se propagent les rayons réfléchis, cet espace étant délimité par une surface de l'écran et une surface réfléchissante du réflecteur, au moins une de ces surfaces étant bombée. C'est un mode simple à réaliser permettant de renforcer l'effet 3D.

L'écran est préférentiellement disposé à distance du réflecteur.

Selon un encore autre mode avantageux de l'invention, les moyens rayonnants comprennent une source de lumière et au moins un élément de déviation des rayons émis par la source de lumière.

Selon un encore autre mode avantageux de l'invention, l'élément de déviation comprend au moins un guide de lumière préférentiellement longitudinal.

Selon un encore autre mode avantageux de l'invention, le guide de lumière est configuré pour réfléchir généralement transversalement à son axe longitudinal les rayons lumineux parcourant le guide de manière à former les rayons lumineux envoyés par les moyens rayonnants.

Selon un autre mode avantageux de l'invention, le guide de lumière est de section généralement circulaire.

Selon un encore autre mode avantageux de l'invention, le guide de lumière est disposé de manière à ce que son axe longitudinal soit généralement parallèle à l'écran et/ou au réflecteur.

Selon un encore autre mode avantageux de l'invention, le guide de lumière est disposé le long d'un bord du réflecteur.

Selon un encore autre mode avantageux de l'invention, les moyens rayonnants sont configurés pour que le guide de lumière soit alimenté en lumière exclusivement à au moins une de ses extrémités.

Selon un encore autre mode avantageux de l'invention, le guide de lumière comprend à sa surface extérieure, préférentiellement sur une partie qui est opposée à l'écran, une première rangée de facettes réfléchissantes aptes à réfléchir généralement transversalement selon une première direction. La première direction est par exemple perpendiculaire à l'axe longitudinal du guide parcouru par les rayons lumineux.

Selon un encore autre mode avantageux de l'invention, les moyens rayonnants émettent des rayons lumineux selon une seule direction principale et la zone semi-transparente de l'écran est disposée de manière à ce qu'un de ses bords soit la frontière entre la première partie et la deuxième partie des rayons lumineux.

Selon un encore autre mode avantageux de l'invention, le guide de lumière comprend à sa surface extérieure une deuxième rangée de facettes réfléchissantes aptes à réfléchir les rayons lumineux le parcourant, selon une deuxième direction inclinée par rapport à la première direction de manière à ce que les rayons émis soient dirigés vers la zone semi-transparente. Préférentiellement, les facettes réfléchissantes sont aptes à réfléchir les rayons lumineux le parcourant généralement transversalement à l'axe longitudinal du guide. Selon une variante avantageuse, lesdits rayons émis sont préférentiellement majoritairement dirigés vers la zone semi-transparente.

Selon un encore autre mode avantageux de l'invention, la deuxième rangée de facettes réfléchissantes est disposée généralement parallèlement à la première rangée.

Selon un encore autre mode avantageux de l'invention, les moyens rayonnants comprennent deux guides de lumière, par exemple longitudinaux, configurés pour réfléchir les rayons lumineux les parcourant de manière à former deux faisceaux de rayons lumineux parallèles selon la direction principale d'illumination. Dans le cas ou ces guides sont longitudinaux, ils peuvent transmettre ces rayons généralement transversalement à leur axe longitudinal. Ils peuvent également être parallèles.

Selon un encore autre mode avantageux de l'invention, un des deux faisceaux lumineux rencontre majoritairement la zone semi-transparente et l'autre des deux faisceaux lumineux est transmis majoritairement directement par le module sans rencontrer ladite zone.

Selon un encore autre mode avantageux de l'invention, le guide de lumière présente une section transversale généralement plate, une surface de sortie et une surface de réflexion configurée pour réfléchir vers la surface de sortie les rayons lumineux introduits dans le guide de lumière depuis une zone interne du guide.

Selon un encore autre mode avantageux de l'invention, la surface de réflexion du guide est une surface réglée courbée générée par des droites perpendiculaires à l'axe longitudinal du guide.

Selon un encore autre mode avantageux de l'invention, le guide de lumière comporte plusieurs zones internes d'introduction de lumière réparties longitudinalement.

L'invention a également pour objet un dispositif de signalisation pour véhicule automobile comprenant un module selon l'invention, tel qu'un feu de position, un feu stop ou un indicateur de changement de direction.

L'invention présente l'avantage de proposer un dispositif de signalisation qui allie un aspect intéressant avec une performance intéressante d'un point de vue photométrique. Cette performance photométrique permet de réaliser les deux fonctions « lanterne » et « stop » d'une manière originale et intéressante d'un point de vue coût notamment en raison d'une puissance d'éclairage limitée. De plus, l'utilisation d'un guide de lumière confère une grande liberté de design, une homogénéité d'éclairage accrue et une apparence d'autant plus intéressante.

D'autres caractéristiques et avantages de la présente invention seront mieux compris à l'aide de la description et des dessins parmi lesquels :
- la figure 1 est une illustration d'un module de signalisation selon un premier mode de réalisation de l'invention ;
- la figure 2 est une vue en coupe longitudinale horizontale du guide de lumière du module de signalisation de la figure 1 ;
- la figure 3 est une illustration de l'image produite par le module de signalisation de la figure 1 ;
- la figure 4 est une illustration d'un module de signalisation selon un deuxième mode de réalisation de l'invention ;
- la figure 5 est une illustration d'un module de signalisation selon un troisième mode de réalisation de l'invention ;
- la figure 6 est une illustration d'un module de signalisation selon un troisième mode de réalisation de l'invention ;

Les différents modes de réalisation illustrés aux figures sont volontairement simplifiés et schématiques à des fin de clarté d'exposé de l'invention. En pratique, les différents éléments constitutifs de l'invention pourront prendre des formes sensiblement plus complexes notamment en raison de différentes contraintes liées au dimensionnement.

Dans la description qui va suivre, les termes qualifiant la position de certains éléments, tels que « au-dessus », « en-dessous », « avant », « arrière », « devant », « derrière », « horizontal », « vertical », « supérieur », « inférieur », etc. se référent aux agencements spécifiques des figures. Ces termes ne sont cependant pas à être interprétés de manière stricte et absolue mais bien relative. En effet, les modules de signalisation qui y sont décrits peuvent être en pratiques orientés différemment sans s'éloigner aucunement de l'invention.

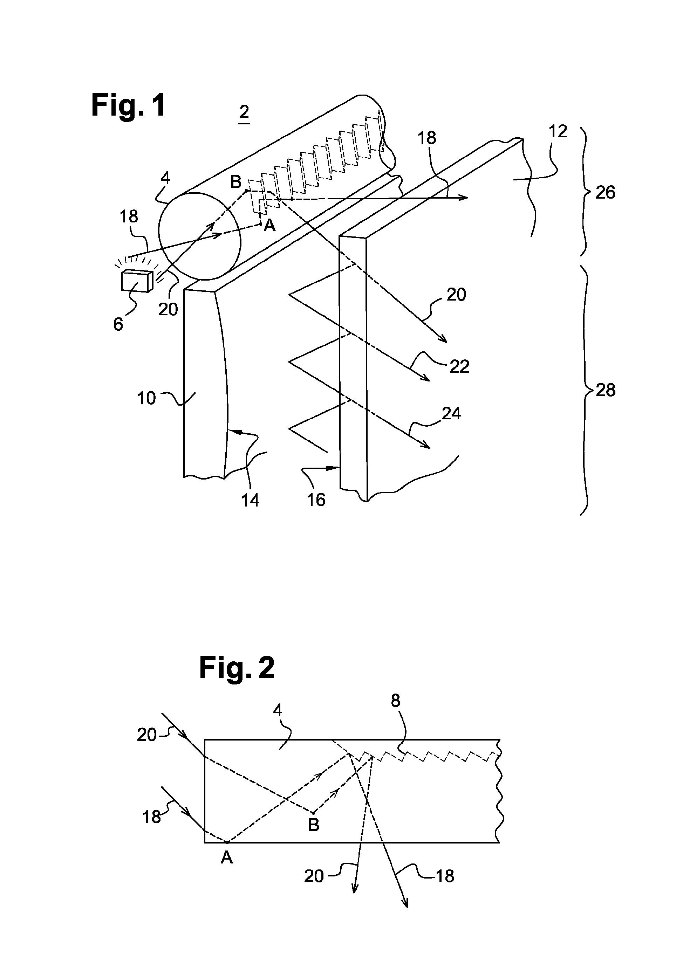

La figure 1 illustre un module de signalisation conforme à un premier mode de réalisation de l'invention. Le module 2 comprend essentiellement un guide de lumière 4 s'étendant longitudinalement de manière transversale à la direction générale d'éclairage ou d'illumination, cette dernière étant orientée horizontalement de la gauche vers la droite. Le module comprend également un écran 12 avec une surface semi-transparente 16, disposé devant le guide de lumière 4, ainsi qu'un réflecteur 10 disposé en-dessous du guide de lumière 4 et en face de l'écran 12.

Le guide de lumière est de section généralement circulaire et comprend une série de facettes 8 sur la partie arrière de sa surface. Ces facettes forment des surfaces réfléchissantes et sont orientées de manière à réfléchir transversalement les rayons lumineux se propageant le long du guide, de manière à ce qu'ils sortent du guide et se propagent selon la direction principale d'illumination. Ces facettes 8 sont préférentiellement recouvertes d'un revêtement réfléchissant. Le guide de lumière est alimenté en rayons lumineux par une ou plusieurs sources lumineuses 6, telles que des diodes à électroluminescence (LED), depuis une des extrémités.

Lorsque la LED 6 est alimentée, elle émet ses rayons lumineux essentiellement dans un demi-espace dirigé vers l'extrémité du guide de lumière. Deux rayons lumineux sont représentés à la figure 1 ainsi qu'à la figure 2 de manière à illustrer le principe de fonctionnement du guide de lumière et du module de signalisation.

Un premier rayon 18 dans un plan généralement horizontal entre dans le guide de lumière 4 avec réfraction pour se réfléchir en un point A sur la surface externe du guide suivant le principe de réflexion totale. La surface du guide forme en effet un dioptre entre le matériau du guide d'un indice de réfraction donné (typiquement de l'ordre de 1.6 pour du polycarbonate) et l'air ambiant d'un indice de réfraction différent (égale à 1). Cette différence d'indice de réfraction de deux milieux contigus a pour conséquence qu'il existe un angle d'incidence limite au delà duquel la réfraction est impossible et pour lequel il y a réflexion totale. Dans le cas d'un milieu en polycarbonate entouré d'air, cet angle limite est de l'ordre de 38° (selon la loi de Snell-Descartes). Ce rayon 18 va ensuite se diriger vers une des facettes 8 réfléchissantes pour y être réfléchi selon une direction transversale à l'axe longitudinal du guide, rencontrer la surface du guide selon un angle d'incidence faible et inférieur à l'angle d'incidence limite (évoqué précédemment) et sortir du guide avec éventuellement un légère réfraction. Ce rayon est dans un plan généralement horizontal et se propage directement vers l'espace à éclairer ou illuminer en passant au-dessus du bord supérieur de l'écran 12.

Le rayon 20 émis également par la LED 6 est orienté selon une direction ayant une composante verticale. Il entre dans le guide avec une légère réfraction et se propage jusqu'à un point B de la surface du guide. Similairement au rayon 18 selon le principe de réflexion totale, le rayon 20 va être réfléchi vers une des facettes réfléchissantes 8. Il va ensuite être réfléchi sur ladite facette pour ensuite se diriger vers la surface avant du guide. Similairement au rayon 18, il va rencontrer la surface avant du guide avec un angle d'incidence très faible et, partant, sortir du guide avec une légère réfraction et se propager vers la surface semi-réfléchissante 16 de l'écran 12. Comme cela est visible à la figure 2 qui est une vue en coupe selon un plan longitudinal horizontal, le rayon 20 évolue similairement au rayon 18 dans un plan horizontal. Comme cela est visible à la figure 1 qui est une vue en perspective, le rayon 20 sortant de la LED 6, de par son inclinaison par rapport au plan horizontal, évolue dans un plan incliné pour être ensuite réfléchi par la facette réfléchissante 8 vers une partie basse de la surface avant du guide.

Il est à noter que la propagation de rayons lumineux le long d'un guide de lumière et la sortie de ces rayons au moyen de facettes réfléchissantes notamment du type prismatique est bien connue en soi de l'homme de métier.

Les deux rayons 18 et 20 sont deux exemples illustratifs des rayons émis par la LED 6 et transmis par le guide de lumière 4. Le rayonnement lumineux émis par la LED et transmis par le guide de lumière 4 comprend bien sûr un faisceau constitué d'une multitude de rayons lumineux qui vont parcourir le guide en subissant une série de réflexion pour en sortir de manière homogène le long de ce dernier. Une partie des rayons sortant va sortir du guide selon une direction proche de la direction principale d'éclairage et, partant, passer au dessus de la surface semi-réfléchissante 16 de l'écran 12. Une autre partie des rayons sortant va sortir du guide selon des directions inclinées vers le bas par rapport à la direction principale d'éclairage et vont ainsi rencontrer la surface semi-réfléchissante 16.

Les rayons rencontrant la surface semi-réfléchissante 16 de l'écran 12, tels que le rayon 20, vont être partiellement transmis et partiellement réfléchis. En effet, le rayon 20 représentatif de ces rayons subit une réflexion partielle sur la surface semi-réfléchissante 16. La partie réfléchie du rayon 20 est renvoyée vers l'écran 12 par le réflecteur 10 pour être à nouveau partiellement transmise 22 et réfléchie. Cette partie réfléchie du rayon 22 est renvoyée vers l'écran 12 par le réflecteur 10 pour être à nouveau partiellement transmise 24, et ainsi de suite. Par conséquent, une partie des rayons lumineux rencontrant la partie semi-transparente, de préférence plus de 4% des rayons rencontrant cette surface, est réfléchie vers le réflecteur par l'écran. Cette partie réfléchie est ensuite totalement ou quasi totalement réfléchie vers l'écran 12 par la surface réfléchissante 14 du réflecteur 10. Ces rayons vont ensuite, similairement aux rayons précédents, être partiellement transmis par l'écran semi-transparent 12 et partiellement réfléchis à nouveau vers le réflecteur 10. Ce jeu de réflexion et de déplacement vers le centre de la cavité est assuré par la nature bombée du réflecteur 10. Il est à noter qu'alternativement la surface du réflecteur pourrait être généralement plane et la surface interne de l'écran délimitant la cavité serait alors bombée. Il est également envisageable de considérer une combinaison de surfaces bombées au niveau de l'écran et du réflecteur.

L'écran 12 peut être réalisé avec un matériau transparent couramment utilisé comme par exemple certains plastiques ou du verre. Une des ses surfaces, la surfaces externe ou interne, est rendue semi-transparente par application d'un revêtement typiquement partiellement réfléchissant. Le revêtement est habituellement un revêtement métallique comme de l'aluminium ou un métal inoxydable appliqué par technique de déposition en phase vapeur et sous vide. Diverses méthodes d'application du revêtement connues de l'homme de métier peuvent être utilisées. Le taux de réflexion du revêtement est par exemple compris entre 20% et 60%.

Les rayons se propageant directement vers l'espace à éclairer ou illuminer sans rencontrer la surface semi-réfléchissante 16 vont constituer un premier faisceau d'éclairage 26 qui peut correspondre à une fonction "stop". Les rayons rencontrant la surface semi-réfléchissante 16 vont subir des pertes lors des transmissions partielles successives et peuvent ainsi correspondre à une fonction de signalisation du type "lanterne". En effet, d'un point de vue réglementation la puissance d'éclairage requise pour la fonction "lanterne" est inférieure à celle requise pour la fonction "stop", et ce dans un rapport supérieure à 10. Il s'ensuit que le module décrit ci-avant est particulièrement bien adapté à une telle application.

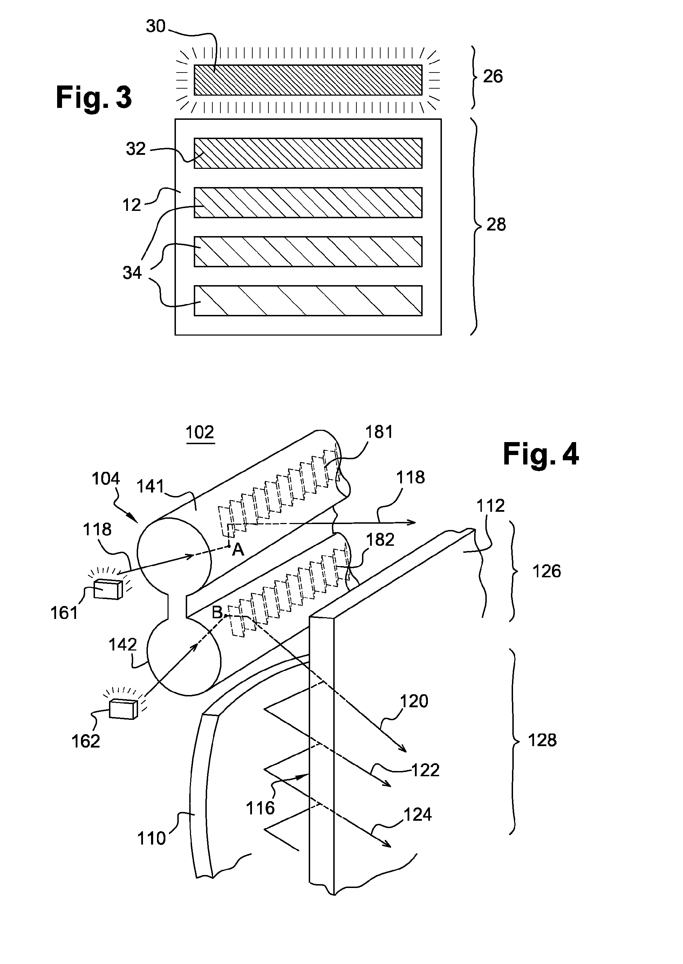

La figure 3 illustre l'image produite par le module de la figure 1. La partie supérieure 26 du faisceau correspond à des rayons transmis directement sans rencontrer la surface semi-réfléchissante. L'image produite comprend une bande 30 correspondant au guide de lumière. La multitude de facettes réfléchissantes du guide de lumière assure un certain niveau d'homogénéité de l'image produite. En fonction de la taille de ces facettes notamment, l'image pourra présenter une homogénéité plus ou moins grande.

La partie inférieure 28 génère un effet tridimensionnel. L'image produite comprend une première bande 32 correspondant essentiellement à la bande 30 mais avec un niveau de puissance plus faible en raison de pertes inhérentes à la transmission au travers de la surface semi-réfléchissante. Elle comprend également une série de bandes 34 correspondant à la bande initiale 32 se répétant et devenant de plus en plus fine, générant ainsi l'effet 3D. Le niveau de puissance d'éclairage décroit également progressivement en raison des pertes liées à la transmission au travers de la surface semi-réfléchissante.

La ou les LEDs 6 sont préférentiellement pilotées en courant (PWD pour « Pulse Width Modulation »). La relation qui lie la tension et le courant d'alimentation des semi conducteurs émissifs (les LEDs) n'est pas linéaire. Ainsi, une petite augmentation de tension appliquée à la LED peut entraîner une augmentation importante du courant et donc du flux lumineux émis. La luminosité des LEDs pour être contrôlée nécessite un courant dont l'intensité demeure constante quelle que soit la tension d'entrée.

En pratique, les deux parties 26 et 28 du faisceau d'éclairage produit sont toujours présentes lorsque la ou les sources lumineuses sont alimentées en courant électrique. En fonction de la puissance d'alimentation, le module en question pourra assurer les fonctions "stop" et "lanterne". En effet, à un niveau bas de puissance d'alimentation, la partie 26 du faisceau provenant directement du guide, c'est-à-dire sans subir de réflexion partielle, produira un premier niveau d'éclairage suffisant d'un point de vue photométrique et réglementation pour la fonction "lanterne". A un niveau haut de puissance d'alimentation, la partie 26 du faisceau provenant directement du guide produira un niveau d'éclairage supérieur correspondant d'un point de vue photométrique et réglementation aux exigences de la fonction "stop". La partie tridimensionnelle 28 produira alors un niveau d'éclairage plus important que lors de la fonction "lanterne" seule. Ce niveau d'éclairage seul sera alors suffisant d'un point de vue réglementation pour la fonction « lanterne ». Le module décrit ci-avant permet ainsi de proposer une double fonction "stop" et "lanterne" avec un effet tridimensionnel sans toutefois requérir une puissance d'éclairage trop importante au niveau des sources lumineuse. Cela est dû essentiellement au fait qu'une partie du faisceau sortant du guide de lumière se propage directement vers l'espace à éclairer sans subir de perte. La construction du module avec le guide de lumière confère une grande liberté d'un point de vue design. La construction du module est également particulièrement simple et peu coûteuse.

Dans la configuration de la figure 1, l'écran 12 est positionné de manière à ce que son bord supérieur soit approximativement à mi-hauteur du guide de lumière, de manière à ce que la partie supérieure du faisceau lumineux sortant du guide se propage directement vers l'espace à illuminer sans le rencontrer. La surface semi-réfléchissante 16 s'étend jusqu'au bord supérieur, formant ainsi un bord de coupure entre les faisceaux transmis directement et ceux subissant un jeu de réflexion partielle. Il est à noter que l'écran peut comprendre une partie transparente et une partie semi-transparente, la partie transparente pouvant alors s'étendre vers la partie supérieure du faisceau de manière à être traversée par les rayons de la partie supérieure 26 du faisceau produit.

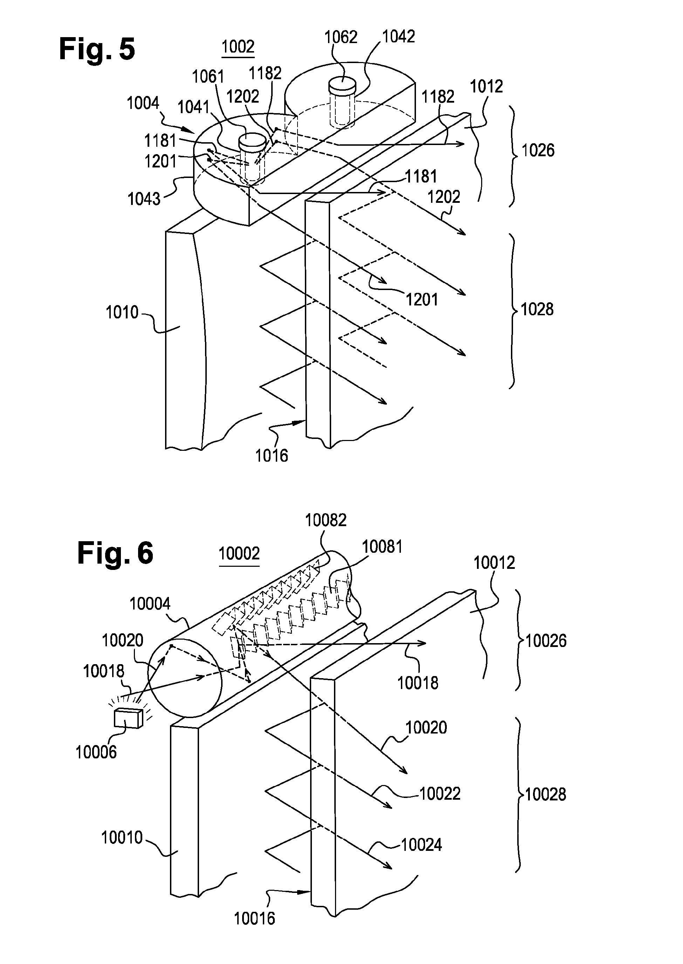

D'autres exemples de réalisation de l'invention vont être décrits en relation avec les figures 4 à 8. Ces exemples constituent des variantes de l'exemple de la figure 1. De nombreux éléments constitutifs des modules illustrés dans ces figures correspondent à ceux de la figure 1. Une numérotation cohérente a été adoptée pour désigner ces différents éléments sachant que les signes de référence de la figure 4 correspondent à ceux de la figure 1 à cette différence qu'ils sont majorés de 100. Il en va de même pour la figure 5 où ils sont majorés de 1000 et pour la figure 6 où ils sont majorés de 10000. Des numéros spécifiques à chaque exemple de réalisation ont été employés pour désigner les éléments n'étant pas présents à la figure 1.

La figure 4 illustre un deuxième exemple de réalisation d'un module de signalisation conforme à l'invention. Il se distingue du premier exemple essentiellement en ce que les moyens rayonnants 104 comprennent deux guides de lumière 141 et 142 disposés en parallèles et l'un au-dessus de l'autre. Chacun de ces guides de lumière 141, 142 comprend spécifiquement à au moins une de ses extrémités sa propre source lumineuse constituée d'une ou plusieurs LEDs 161 et 162. Chacun de ces guides de lumière 141, 142 comprend également une série de facettes réfléchissantes 181 et 182, similairement au guide de lumière de la figure 1. Ces facettes sont disposées de manière à réfléchir transversalement vers l'espace à illuminer les rayons se propageant le long des guides de lumière.

Les rayons émis par la LED 161 du guide de lumière supérieur 141 se propagent le long du guide et sont réfléchis de manière homogène selon une direction généralement perpendiculaire à l'axe longitudinal du guide. Un rayon 118 est représenté afin d'illustrer le principe de réflexion. Le guide 141 et ses facettes réfléchissantes 181 sont configurés de manière à ce que la majorité des rayons sortant du guide soient orientés selon la direction principale d'illumination. Ces rayons, tel le rayon 18, se propagent directement vers l'espace à illuminer sans rencontrer la surface semi-réfléchissante 116 de l'écran 112.

Les phénomènes détaillés pour le guide de lumière supérieur 141 s'appliquent également au guide de lumière inférieur 142. Un rayon 120 est représenté afin d'illustrer, similairement, les phénomènes de réflexion. Les rayons sortant du guide de lumière inférieur 142 rencontrent majoritairement la surface semi-réfléchissante 116. Ces rayons sont alors partiellement transmis et partiellement réfléchis vers un réflecteur 110. Ce dernier présente une surface non plane comme par exemple bombée concave. Le jeu de réflexion-transmission des rayons avec la surface semi-réfléchissante 116 et de réflexion pure avec le réflecteur 110 génère un effet 3D similairement au module du premier mode de réalisation de l'invention. Plus particulièrement, le rayon 120 sortant du guide est partiellement transmis par l'écran 112 et partiellement réfléchi vers le réflecteur 110 pour être ensuite partiellement transmis par l'écran selon un rayon 122 et partiellement réfléchi vers le réflecteur pour être ensuite encore partiellement transmis selon un rayon 124 et ainsi de suite.

Le module de la figure 4 produit ainsi deux faisceaux indépendants, à savoir un premier faisceau 126 dont les rayons sortant du guide de lumière supérieur 141 se propagent directement vers l'espace à illuminer sans rencontrer la surface semi-réfléchissante, et un deuxième faisceau 128 traversant la surface semi-réfléchissante 116.

Le premier faisceau 126 peut par conséquent correspondre à une fonction "stop" et la deuxième 128 à une fonction "lanterne". Dans ce cas, les sources lumineuses 161 et 162 sont alimentées de manière indépendante. L'alimentation de la source lumineuse 162 du deuxième faisceau assurera alors la fonction "lanterne" avec un effet 3D et l'alimentation de la source lumineuse 161 du premier faisceau assurera la fonction "stop". Le "stop" pourra donc fonctionner sans effet tridimensionnel. Il est toutefois à noter qu'il est possible de prévoir une alimentation couplée afin que l'effet tridimensionnel soit présent dans les deux fonctions.

La figure 5 illustre un troisième exemple de réalisation d'un module de signalisation selon l'invention. Il est similaire au premier mode avec toutefois pour différence majeure le type de guide de lumière. En effet, le guide de lumière du premier exemple de réalisation (figure 1) est de section généralement circulaire et propage la lumière selon son axe longitudinal. Dans le cas de la figure 5, le guide de lumière 1004 est différent dans la mesure où il reçoit la lumière depuis une zone interne et non pas depuis une extrémité. Plus particulièrement, le guide de lumière 1004 comprend une série d'orifices ou puis 1041, 1042 répartis sur sa longueur. Une source lumineuse 1061, 1062 est disposé dans ou à proximité de chaque orifice 1041, 1042. Les rayons émis par une des sources lumineuses 1061 dans des directions latérales à la direction principale d'éclairage et des directions arrière sont réfléchis par une surface réfléchissante 1043 du guide selon une direction généralement alignée avec la direction principale d'éclairage. Cette surface est généralement réglée par des génératrices perpendiculaires à l'axe longitudinal du guide de lumière. Elle présente un profil courbe de manière à pouvoir assurer la réflexion de la majorité des rayons se propageant dans un secteur de plus de 180°, ce secteur étant essentiellement orienté vers l'arrière. Ces rayons sont réfléchis de manière à rencontrer la surface de sortie de manière essentiellement perpendiculaire. La surface 1043 présente par conséquent une succession de profils courbes, chacun de ces profils contournant une source lumineuse. Le guide de lumière 1004 est de section transversale généralement droite. La face de sortie du guide de lumière 1004 présente également une section transversale généralement droite.

Les principes de fonctionnement et les détails structurels d'un tel guide de lumière sont bien connus en soi de l'homme de métier, notamment du document de brevet EP 1 881 263 A1.

Similairement au premier mode de réalisation de l'invention à la figure 1, une partie des rayons émis par le guide de lumière essentiellement selon la direction principale d'illumination se propage directement vers l'espace à illuminer sans rencontrer la surface semi-réfléchissante 1016 et une autre partie de ces rayons rencontre la surface anti-réfléchissante 1016. Quatre rayons sont représentés afin de bien illustrer les phénomènes de propagation de la lumière. Un premier rayon 1181 est émis par la source lumineuse 1061 dans une direction latérale du module et légèrement dirigée vers le haut. Ce rayon rencontre la surface réfléchissante 1043 en un point donné situé dans une moitié haute de la dite surface. Le rayon est réfléchi vers la surface de sortie avec un angle d'incidence faible. Le rayon sort de ladite surface avec peu ou pas de réfraction et passe au-dessus du bord supérieur de la surface semi-réfléchissante 1016 pour se propager directement vers l'espace à illuminer. Il en va de même pour le deuxième rayon 1182 émis par la même source lumineuse dans une direction globalement opposée à celle du premier rayon 1181 et également légèrement dirigée vers le haut. Ce rayon est réfléchi par la surface réfléchissante 1043, sort du guide et se propage directement vers l'espace à illuminer. Le troisième rayon 1201 est émis dans une direction proche de celle du premier rayon mais inclinée légèrement vers le bas. Ce rayon va être réfléchi par la surface réfléchissante 1043 similairement au premier rayon selon une direction légèrement inclinée vers le bas. En sortant du guide de lumière avec cette inclinaison le rayon va rencontrer la surface semi-réfléchissante 1016 et subir un jeu de transmission partielle et de réflexion partielle avec le réflecteur 1010 similairement aux modules des figures 1 et 4.

La surface réfléchissante 1043, de par sa forme enveloppante et son profil choisi, a la capacité à « récupérer » par voie de réflexion la majorité des rayons émis par la source lumineuse et se propageant dans le guide de manière radiale dans un secteur de plus de 180°, préférentiellement un secteur supérieur à 220°, plus préférentiellement encore un secteur supérieur à 270° généralement dirigé vers l'arrière.

Une partie des rayons sortant du guide de lumière va par conséquent se propager directement vers l'espace à illuminer sans rencontrer la surface semi-transparente et une autre partie des rayons va subir un jeu de transmission partielle et de réflexion partielle générant ainsi une image tridimensionnelle de moindre puissance photométrique. Au vu de la similitude des modules des figures 5 et 1, les remarques faites en relation avec la figure 1 en ce qui concerne les fonctions "stop" et "lanterne" et l'alimentation des sources lumineuse s'appliquent également à la figure 5.

La figure 6 illustre un quatrième exemple de réalisation d'un module de signalisation selon l'invention. Il est similaire notamment à celui de la figure 1 à la différence principale près que le guide de lumière comprend une deuxième rangée de facettes réfléchissantes de manière à réfléchir une partie des rayons se propageant dans le guide selon une direction inclinée vers le bas. En effet, le guide de lumière 10004 de la figure 6 est similaire à celui de la figure 1. Il est de section généralement circulaire et comprend une première rangée de facettes réfléchissantes 10081 comparable à la rangée de facettes 8 de la figure 1. Il comprend, en outre, une deuxième rangée de facettes réfléchissantes 10082 décalée angulairement par rapport à la première rangée. La première rangée de facettes réfléchissantes réfléchit une partie des rayons se propageant le long du guide de lumière, selon une direction généralement transversale, préférentiellement perpendiculaire, à l'axe longitudinal du guide de lumière et généralement alignée avec la direction principale d'illumination. La deuxième rangée de facettes réfléchissantes 10082 est disposée parallèlement à la première, dans une position angulaire décalée de manière à réfléchir une autre partie des rayons se propageant le long du guide de lumière, selon une direction généralement transversale, préférentiellement perpendiculaire, à l'axe longitudinal du guide de lumière et inclinée par rapport à la direction principale d'illumination. Ces rayons réfléchis par la deuxième rangée de facettes réfléchissantes 10082 rencontrent la surface semi-transparente 10016 de l'écran 10012. Ces rayons subissent un jeu successif de transmission et de réflexion partielle avec l'écran 10112 et de réflexion pure avec le réflecteur 10010.

Deux rayons 10018 et 10020 sont représentés afin d'illustrer le principe de propagation et de réflexion de la lumière. Le premier rayon 10018 est comparable au rayon 18 de la figure 1. Il est émis par la LED 10006 dans un plan généralement horizontal. Il rencontre la surface du guide et y subit une réflexion basée sur le principe de réflexion totale pour ensuite rencontrer une facette réfléchissante 10081 et y être réfléchi selon une direction généralement perpendiculaire à l'axe longitudinal du guide. Le premier rayon 10081 reste approximativement dans le plan horizontal et sort du guide en se propageant selon la direction principale d'éclairage directement vers l'espace à illuminer sans rencontrer la surface semi-transparente. Le deuxième rayon 10020 émis par la LED 10006 est incliné vers le haut et subit deux réflexions successives sur la surface du guide de lumière, basées sur le principe de réflexion totale. Il rencontre ensuite une facette réfléchissante 10082 de la deuxième rangée. L'angle que forme cette facette par rapport à la première rangée de facettes réfléchissantes a pour effet de renvoyer le rayon 10020 légèrement vers le bas et, partant, vers la surface semi-réfléchissante 10016 de l'écran 10012. Il s'ensuit alors une succession de réflexions/transmissions partielles avec la surface semi-réfléchissantes 10016 et de réflexions totales avec le réflecteur 10010. Ce dernier est incliné par rapport à la surface semi-réfléchissante de manière à influencer l'interaction avec ladite surface et à générer un effet tridimensionnel. Il pourrait également être bombé concave ou convexe comme dans les modules des figures 1 et 4.

Similairement aux remarques faites pour l'exemple de la figure 1, la partie supérieure 10026 du faisceau provenant de la première rangée de facettes réfléchissantes 10081 sans subir de transmission partielle permet d'assurer une puissance d'éclairage conforme aux exigences photométriques pour la fonction "stop". La partie inférieure 10028 du faisceau provenant de la deuxième rangée de facettes 10082 produit une image avec effet tridimensionnel de moindre puissance d'éclairage notamment pour la fonction "lanterne" en combinaison avec la fonction "stop". La fonction "lanterne" pourra être assurée par les deux parties 10026 et 10028 lorsque la ou les sources lumineuses sont alimenté avec moins de puissance.

## Revendications

1. Module de signalisation lumineuse, notamment pour véhicules automobiles, comprenant :
- un réflecteur (10 ; 110 ; 1010 ; 1110) avec une surface réfléchissante;
- un écran (12 ; 112 ; 1012 ; 10012) disposé en face du réflecteur, l'écran comprenant une zone semi-réfléchissante (16 ; 116 ; 1016 ; 10016) ;
- des moyens rayonnants (4, 6 ; 104 ; 161, 162 ; 1004, 1061, 1062 ; 10004, 10006) aptes à envoyer des rayons lumineux,
le réflecteur, l'écran et les moyens rayonnants étant agencés de manière à ce qu'une première partie desdits rayons émis par les moyens rayonnants rencontre la zone semi-réfléchissante, certains des rayons de cette première partie étant transmis directement à travers la zone semi-réfléchissante, d'autres des rayons de cette première partie étant réfléchis par la zone semi-réfléchissante vers le réflecteur qui les renvoie à nouveau vers la zone semi-réfléchissante, de manière à générer un effet visuel répétitif de profondeur ; **caractérisé en ce que** la zone semi-réfléchissante (16 ; 116 ; 1016 ; 10016) est configurée et agencée par rapport aux moyens rayonnant (4, 6 ; 104 ; 161, 162 ; 1004, 1061, 1062 ; 10004, 10006) de manière à ce qu'une deuxième partie des rayons lumineux émis par des moyens rayonnant ne rencontre pas la zone semi-transparente.

2. Module de signalisation lumineuse selon la revendication 1, dans lequel l'écran (12 ; 112 ; 1012 ; 10012) forme avec ledit réflecteur (10 ; 110 ; 1010 ; 1110) un espace (5 ; 105 ; 1005) dans lequel se propage les rayons réfléchis, cet espace étant délimité par une surface dé l'écran et une surface réfléchissante du réflecteur, au moins une de ces surfaces étant agencée de manière à ce que les rayons réfléchis par la zone semi-réfléchissante depuis un premier endroit de cette zone rencontrent à nouveau cette zone, après réflexion sur le réflecteur, en un deuxième endroit distinct du premier endroit.

3. Module de signalisation lumineuse selon la revendication 1 ou 2, dans lequel l'écran (12 ; 112 ; 1012 ; 10012) forme avec ledit réflecteur (10 ; 110 ; 1010 ; 1110) un espace (5 ; 105 ; 1005) dans lequel se propage les rayons réfléchis, cet espace étant délimité par une surface de l'écran et une surface réfléchissante du réflecteur, au moins une de ces surfaces étant bombée.

4. Module de signalisation lumineuse selon l'une des revendications précédentes, **caractérisé en ce que** les moyens rayonnants comprennent une source de lumière (6 ; 161, 162 ; 1061, 1062 ; 10006) et au moins un élément de déviation (4 ; 104 ; 1004 ; 10004) des rayons émis par la source de lumière.

5. Module de signalisation lumineuse selon la revendication 4, **caractérisé en ce que** l'élément de déviation comprend au moins un guide de lumière (4 ; 104 ; 1004 ; 10006), notamment un guide de lumière longitudinal.

6. Module de signalisation lumineuse selon la revendication 5, dans lequel le guide de lumière (4 ; 104 ; 10004) est configuré pour réfléchir généralement transversalement à son axe longitudinal les rayons lumineux parcourant le guide de manière à former les rayons lumineux envoyés par les moyens rayonnant.

7. Module de signalisation lumineuse selon l'une des revendications 5 à 6, **caractérisé en ce que** le guide de lumière (4 ; 104, 1004 ; 10004) est disposé le long d'un bord du réflecteur (10, 110 ; 1010 ; 10010).

8. Module de signalisation lumineuse selon l'une des revendications 5 à 7, **caractérisé en ce que** les moyens rayonnants (4, 6 ; 104 ; 161, 162 ; 10004, 10006) sont configurés pour que le guide de lumière (4 ; 104 ; 10004) soit alimenté en lumière exclusivement à au moins une de ses extrémités.

9. Module de signalisation lumineuse selon l'une des revendications 5 à 8, **caractérisé en ce que** le guide de lumière (4 ; 104 ; 10004) comprend à sa surface extérieure, préférentiellement sur une partie qui est opposée à l'écran, une première rangée de facettes réfléchissantes (8 ; 181 ; 10081) aptes à réfléchir généralement transversalement selon une première direction.

10. Module de signalisation lumineuse selon l'une des revendications 1 à 9, **caractérisé en ce que** les moyens rayonnants (4, 6 ; 104 ; 161, 162 ; 1004, 1061, 1062 ; 10004, 10006) émettent des rayons lumineux selon une seule direction principale et la zone semi-transparente (16 ; 116 ; 1016 ; 10016) de l'écran est disposée de manière à ce qu'un de ses bords soit la frontière entre la première partie et la deuxième partie des rayons lumineux.

11. Module de signalisation lumineuse selon la revendication 9, **caractérisé en ce que** le guide de lumière (10004) comprend à sa surface extérieure une deuxième rangée de facettes réfléchissantes (10082) aptes à réfléchir les rayons lumineux le parcourant, selon une deuxième direction inclinée par rapport à la première direction de manière à ce que les rayons émis soient dirigés vers la zone semi-transparente (10016).

12. Module de signalisation lumineuse selon l'une des revendications 1 à 11, **caractérisé en ce que** les moyens rayonnants (104 ; 161, 162) comprennent deux guides de lumière, par exemple longitudinaux (141, 142), configurés pour réfléchir les rayons lumineux les parcourant de manière à former deux faisceaux de rayons lumineux parallèles selon une direction principale d'illumination.

13. Module de signalisation lumineuse selon la revendication 12, **caractérisé en ce qu'**un des deux faisceaux lumineux rencontre majoritairement la zone semi-transparente (116) et l'autre des deux faisceaux lumineux est transmis majoritairement directement par le module sans rencontrer ladite zone.

14. Module de signalisation lumineuse selon l'une des revendications 1 à 13, **caractérisé en ce qu'**il comprend un guide de lumière (1004), ce guide de lumière présentant une section transversale généralement plate, une surface de sortie et une surface de réflexion (1043) configurée pour réfléchir vers la surface de sortie les rayons lumineux introduits dans le guide de lumière depuis une zone interne (1041, 1042) du guide.

15. Dispositif de signalisation pour véhicule automobile comprenant un module selon l'une des revendications 1 à 14.
